**Europäisches Patentamt**

**European Patent Office**

**Office européen des brevets**

(19)

(11) Publication number: **0 003 170**
**A1**

(12)

# EUROPEAN PATENT APPLICATION

(21) Application number: **79300032.4**

(22) Date of filing: **09.01.79**

(51) Int. Cl.²: **G 01 F 9/00**
**G 01 F 23/00**

(30) Priority: **18.01.78 GB 205678**

(43) Date of publication of application:
**25.07.79 Bulletin 79/15**

(84) Designated contracting states:
**BE CH DE FR IT LU NL SE**

(71) Applicant: **PLINT AND PARTNERS LIMITED**
**Fishponds Road**
**Wokingham RG11 2QG Berkshire(GB)**

(72) Inventor: **Plint, Michael Alexander**
**8 Watermans Way**
**Wargrave, Berkshire(GB)**

(74) Representative: **Sawers, Lawrence Peter et al,**
**PAGE, WHITE & FARRER 27 Chancery Lane**
**London WC2A 1NT(GB)**

(54) Apparatus for measuring fuel consumption of a liquid-fuel burning engine.

(57) In an apparatus for measuring the gravimetric fuel consumption of a liquid fuel burning engine, in order to avoid having to weigh a vessel from which fuel is withdrawn as it is consumed, a body (18) of higher density than the fuel is suspended from a weighing device (20) in a vessel (10) so as to be partly immersed in the fuel, the cross-sectional areas of the vessel (10) and the body (18) in horizontal planes bearing a precise and known relationship to one another, so that the weighing device (20) measures the weight of fuel withdrawn from the vessel (10) in terms of the gain in the apparent weight of the body (18) which results from the reduction in its immersed volume. Preferably the weighing device (20) is of the electronic type, permitting little or no downward movement of the body (18) to take place, and providing a digital read-out. Further means may be provided to measure the time of operation, the number of revolutions of the engine, and the average dynamometer torque exerted during a test.

- 1 -

## APPARATUS FOR MEASURING FUEL CONSUMPTION
## OF A LIQUID-FUEL BURNING ENGINE

This invention relates to apparatus for measuring the fuel consumption of a liquid-fuel burning engine.

In our British Patent Specification No.1,411,171, we have described and claimed an apparatus for measuring the fuel consumption of such an engine in volumetric terms, comprising a measuring vessel for containing a measured volume of fuel and photoelectric devices for sensing predetermined levels of the fuel as it is withdrawn from the vessel and consumed by the engine. There is, however, a demand for measurement of fuel consumption in gravimetric terms. Various kinds of apparatus for measuring gravimetric fuel consumption are available, but they generally involve the weighing of a vessel from which fuel is withdrawn as it is consumed, and this arrangement is found to have a number of disadvantages.

According to the present invention, an apparatus for measuring the gravimetric fuel consumption of a liquid-fuel burning engine comprises a vessel which is connectable with a source of liquid fuel for delivery of a predetermined volume of fuel to the vessel and which is also connectable at its bottom with the fuel intake of an engine, wherein a body of higher density than the fuel is suspended in the vessel so as to be partially but not wholly immersed when the predetermined volume of fuel is present in the vessel, and the cross-sectional areas of the vessel and body in corresponding horizontal planes throughout the operative vertical range of fuel levels in the vessel bear a precise and known relationship to one another, the body being suspended from a weighing device which measures the weight of fuel withdrawn from the vessel on consumption by the engine in terms of the gain in the apparent weight of the body which arises from the reduction in its immersed volume.

The apparatus thus makes use of Archimedes' principle, that the loss of weight of a body immersed in a liquid is equal to the weight of the liquid displaced by the body. As fuel is withdrawn from the vessel, the immersed volume of the body is reduced in proportion to the volume of fuel withdrawn, this proportion being known from the relative cross-sectional areas of the vessel and body. The apparent weight of the body thus increases in proportion to the weight of fuel withdrawn from the vessel.

In a typical embodiment, both the vessel and body are cylindrical and the horizontal cross-sectional area of the vessel is exactly twice that of the suspended body, in which case the increase in apparent weight of the body will equal the weight of fuel withdrawn from the vessel, subject to any correction for movement of the body as described below. If the cross-sectional area of the vessel were, for example, three times that of the body, the weight of fuel withdrawn from the vessel would equal twice the gain in the apparent weight of the body.

Preferably the body is suspended from the weighing device in such a manner that no more than a minimal downward movement of the body takes place as the fuel is withdrawn from the vessel. In this case, the ratio between the increase in apparent weight of the body and the weight of fuel withdrawn is determined solely by the relative cross-sectional areas of the vessel and body as described above. It is, however, possible to introduce a correction into the measured increase in apparent weight to compensate for any error in the weight of fuel withdrawn which might arise from downward movement of the body. The preferred

- 3 -    0003170

weighing device is of known electronic type, which permits no more than a minimal downward movement and which provides a digital read-out, so that the weight of fuel consumed is directly observable.

The apparatus may further comprise means for measuring the time of operation of the engine during a test, e.g. in the form of a digital clock, so that the weight of fuel consumed in a given time can be observed.

Preferably the apparatus further comprises means for measuring the number of revolutions of the engine during a test, so as to enable the specific fuel consumption to be calculated, and it may advantageously also comprise means for measuring the average dynamometer torque exerted by the engine during a test, in which case a wide range of performance figures of the engine can be calculated from the measured values.

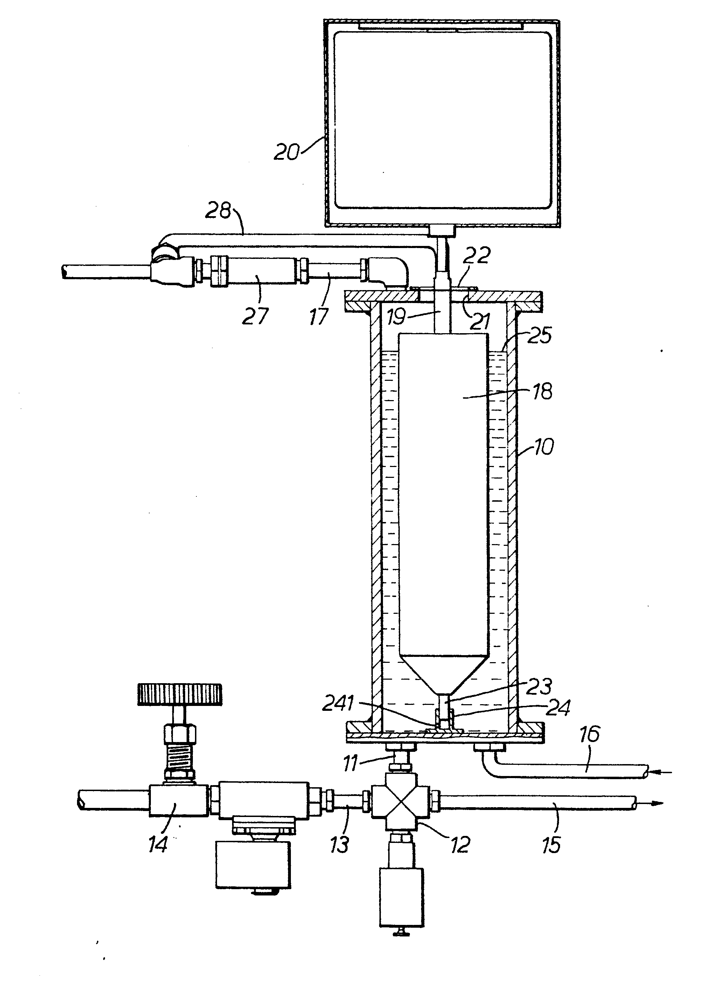

A specific embodiment of the invention will now be described by way of example and with reference to the accompanying drawing, which is a diagrammatic elevation, partly in section, of an apparatus according to the invention.

As shown in the drawing,the apparatus comprises a vertical cylindrical vessel 10 whose bottom can be connected through a pipe 11, junction 12, pipe 13 and stopcock 14 to a source (not shown) of liquid fuel, e.g. diesel oil. The bottom of vessel 10 can also be connected through pipe 11, junction 12 and pipe 15 with the fuel intake of a liquid-fuel burning engine (not shown) whose fuel consumption is to be measured. A further pipe 16 is provided to feed back into the vessel 10 any fuel fed to the fuel intake in excess of the engine's requirements. The top of the vessel 10 is provided with an overflow pipe 17 containing a spring-loaded pressure relief valve 27 and opening to the atmosphere, and with a vent pipe 28 which by-passes the relief valve 27 and which terminates, in the vessel 10, in a floating ball valve (not shown) which is normally open but can seal against an upper seating to prevent escape of fuel from the vessel if the fuel level rises too high. The space above the fuel in the vessel 10 is thus normally in communication with the atmosphere through vent pipe 28, but if the vessel is over-filled the ball valve closes and the relief valve 27 prevents loss of fuel unless the relief pressure is exceeded.

A cylindrical body 18 is mounted axially within the vessel 10, being suspended therein by means of a stem 19 of reduced diameter from an electronic weighing device 20 of known type which employs an electromagnet with a small air gap. This weighing device permits no more than a minimal downward movement of the body suspended from it and provides a digital read-out. The stem 19 passes out of the vessel 10 through an aperture 21 in the top of the vessel and a floppy diaphragm 22, e.g. of rubber, which closes the aperture 21 while offering no resistance to axial movement of stem 19. The bottom of the body 18 carries a further stem 23 of reduced diameter which is guided in a friction-free manner within a cylindrical recess in a boss 24 on the bottom of the vessel 10, so as to locate the body 18 laterally. An aperture 241 in the bottom of the wall of the boss 24 ensures that pressure in the recess is equal to the pressure in the vessel 10 and no resistance is offered to movement of the body 18.

In operation, to carry out a measurement of the fuel consumption of an engine whose fuel intake is connectable to pipe 15, the vessel 10 is filled through stopcock 14 with fuel to a level, such as that indicated at 25, at which the body 18 is partially but not wholly immersed in the fuel, and the stopcock 14 is closed. The electronic weighing device 20 then records the apparent weight of the body 18, namely its actual mass less the weight of fuel displaced by the immersed depth of the body. The engine

0003170

is then run with its fuel intake connected to pipe 15, thus drawing its fuel from the vessel 10. As the fuel is withdrawn, the immersed depth of the body 18 is reduced and the apparent weight of the body 18 recorded by the weighing device 20 increases. The increase in apparent weight is equal to the reduction in the weight of fuel displaced by the body 18, in accordance with Archimedes' principle, and, subject to a possible small correction if there is vertical movement of body 18, the increase in apparent weight thus bears a known relationship to the weight of fuel consumed by the engine, that relationship being determined by the geometrical proportions of the apparatus. Typically, the vessel 10 and body 18 are so dimensioned that the horizontal cross-sectional area of the vessel is exactly twice that of the body, so that the increase in apparent weight is equal to the weight of fuel consumed.

As indicated above, the apparatus may also be provided with time recording apparatus (not shown) such as a digital clock, to enable the gravimetric fuel consumption per unit time to be measured. Means of known type for measuring the number of revolutions of the engine on test may also be provided, to enable the specific consumption to be measured. Finally the engine may be connected to a dynamometer and means of known type may be provided for measuring the average dynamometer torque during test, to enable a wide range of engine performance figures to be calculated.

0003170

Claims

1.    An apparatus for measuring the gravimetric fuel consumption of a liquid-fuel burning engine, comprising a vessel which is connectable with a source of liquid fuel for delivery of a predetermined volume of fuel to the vessel and which is also connectable at its bottom with the fuel intake of an engine, characterised in that a body of higher density than the fuel is suspended in the vessel so as to be partially but not wholly immersed when the predetermined volume of fuel is present in the vessel, and the cross-sectional areas of the vessel and body in corresponding horizontal planes throughout the operative vertical range of fuel levels in the vessel bear a precise and known relationship to one another, the body being suspended from a weighing device which measures the weight of fuel withdrawn from the vessel on consumption by the engine in terms of the gain in the apparent weight of the body which arises from the reduction in its immersed volume.

2.    An apparatus according to Claim 1, characterised in that both the vessel and the body are cylindrical and the horizontal cross-sectional area of the vessel is exactly twice that of the suspended body.

3.    An apparatus according to Claim 1 or 2, characterised in that the body is suspended from the weighing device in such a manner that no more than a minimal downward movement of the body takes place as the fuel is withdrawn from the vessel.

4.    An apparatus according to Claim 3, characterised in that the weighing device is of an electronic type providing a digital read-out.

5.    An apparatus according to any one of the preceding claims, characterised in that it further comprises means for measuring the time of operation of the engine during a test.

0003170

6.   An apparatus according to any one of the preceding Claims, characterised in that it further comprises means for measuring the number of revolutions of the engine during a test.

7.   An apparatus according to any one of the preceding Claims, characterised in that it further comprises means for measuring the average dynamometer torque exerted by the engine during a test.

# EUROPEAN SEARCH REPORT

**European Patent Office**

Application number

EP 79 30 0032

## DOCUMENTS CONSIDERED TO BE RELEVANT

| Category | Citation of document with indication, where appropriate, of relevant passages | Relevant to claim |
|---|---|---|
| X | FR - A - 2 271 547 (I.S.A.M.)  * Figures 1,2; pages 4,9,10 *  -- | 1-6 |
|  | US - A - 3 269 184 (W.F.O. CONNOR)  * Figures 1-13 *  ---- | 1-3 |

**CLASSIFICATION OF THE APPLICATION (Int. Cl.²)**

G 01 F 9/00
23/00

**TECHNICAL FIELDS SEARCHED (Int.Cl.²)**

G 01 F 23/00
9/00

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 12-04-1979 | THIBO |

EPO Form 1503.1   06.78